(19) Europäisches Patentamt
European Patent Office
Office européen des brevets

(11) EP 2 058 674 A1

(12) DEMANDE DE BREVET EUROPEEN

(43) Date de publication:
13.05.2009 Bulletin 2009/20

(51) Int Cl.:
*G01S 13/90* (2006.01)

(21) Numéro de dépôt: 08168445.8

(22) Date de dépôt: 06.11.2008

(84) Etats contractants désignés:
AT BE BG CH CY CZ DE DK EE ES FI FR GB GR HR HU IE IS IT LI LT LU LV MC MT NL NO PL PT RO SE SI SK TR
Etats d'extension désignés:
AL BA MK RS

(30) Priorité: 09.11.2007 FR 0707859

(71) Demandeur: Thales
92200 Neuilly-sur-Seine (FR)

(72) Inventeurs:
• Sfez, Thierry
75012, PARIS (FR)
• Chamouard, Eric
78320, LE MESNIL ST DENIS (FR)

(74) Mandataire: Lucas, Laurent Jacques
Marks & Clerk France
Conseils en Propriété Industrielle
Immeuble " Visium "
22, avenue Aristide Briand
94117 Arcueil Cedex (FR)

(54) **Procédé pour réduire dans un radar SAR bistatique la transmission de données entre porteurs par technique de focalisation à l'émisison**

(57) La présente invention concerne le domaine technique général des systèmes radars bistatiques. Elle concerne plus particulièrement les systèmes bistatiques dont la base émettrice est mobile.

L'invention se propose de réduire le volume de données transmises de l'émetteur vers le récepteur dans un système radar bistatique voire d'éliminer cette transmission dans certains cas. A cet effet l'invention a pour objet un système radar bistatique dans lequel l'émetteur émet une onde dont la forme dépend à chaque instant d'émission de la valeur du vecteur vitesse $\vec{V}_1$ de son porteur relativement à la direction d'émission de l'onde.

L'invention s'applique notamment à la réalisation de radars bistatiques pour la synthèse d'images SAR.

Onde reçue
(mouvements porteur
récepteur uniquement)

Onde émise
Focalisation à l'émission

31

32

33

Onde transmise au niveau du sol

Fig. 3

EP 2 058 674 A1

**Description**

La présente invention concerne le domaine technique général des systèmes radars bistatiques. Elle concerne plus particulièrement la synthèse d'images SAR à partir de systèmes radars bistatiques aéroportés. L'acronyme SAR désigne ici, de manière conventionnelle, l'expression anglo-saxonne "Synthetic Aperture Radar" ou "Radar à Ouverture Synthétique" en français.

Les modes radar SAR sont utilisés communément pour traiter les signaux radars de façon à produire des images à haute résolution du sol, soit dans le contexte de missions de surveillance (reconnaissance d'objets), soit de dans le contexte de missions offensives (localisation et désignation d'objectifs) en association avec des conduites de tir. Cette technique d'imagerie nécessite d'utiliser un radar aéroporté en mouvement par rapport à la zone à imager et de connaître parfaitement la cinématique du porteur du radar pour reconstituer une image nette par intégration d'images successives.

Une manière connue de synthétiser des images SAR, appelée technique SAR monostatique, consiste à utiliser un seul radar unique placé sur un porteur et émettant un signal vers le sol. Ce signal, après propagation et réflexion sur des obstacles au sol, revient vers ce même radar qui le traite pour former l'image SAR.

Une autre manière connue, appelée technique SAR bistatique (ou multistatique), consiste à utiliser deux (ou plusieurs) radars placés sur des porteurs différents, un radar (ou plusieurs) étant chargé d'émettre et un radar (ou plusieurs) étant chargé(s) de recevoir et de traiter les signaux reçus pour former l'image SAR. Par rapport aux techniques monostatiques, les avantages des techniques d'imagerie bistatiques sont multiples :

- le radar récepteur, qui par principe n'émet pas de signal, reste discret vis-à-vis des menaces constituées par les détecteurs placés au sol et peut donc s'approcher plus près de la zone à imager.
- le radar récepteur est par principe insensible au brouillage directif ou au leurrage exercé sur le radar émetteur,
- le radar récepteur peut réaliser une image SAR sans être placé de manière latérale dans l'axe de son porteur comme c'est généralement le cas, ce qui évite, dans le cas d'une mission de conduite de tir, que le porteur soit contraint d'effectuer des manoeuvres de positionnement entre la phase de désignation d'objectif sur l'image SAR et la phase de tir.

En revanche, dans le cas d'une configuration bistatique, les mouvements de porteur à prendre en compte dans le traitement d'imagerie SAR sont à la fois ceux du porteur du radar émetteur et ceux du porteur du radar récepteur. La synthèse correcte de l'image nécessite donc la mise en place et l'entretien permanent d'une liaison de communication, une liaison de transfert de données, entre le porteur émetteur et le porteur récepteur. Par cette liaison, les informations relatives aux mouvements de l'émetteur sont transmises au récepteur pour exploitation.

Par suite, les procédés actuels d'imagerie SAR bistatique (ou multistatique) reposent sur la transmission, via une liaison de données, des données de position et de données cinématiques, relatives au porteur du radar émetteur, vers le porteur du radar récepteur. Ces données doivent en outre être impérativement accompagnées d'une datation précise, l'horloge du radar émetteur devant être rigoureusement synchronisée avec l'horloge du radar récepteur. Outre le fait de mettre en place une telle liaison, Il est donc nécessaire de mettre en oeuvre des moyens pour synchroniser les horloges des deux porteurs, de façon à maintenir cette synchronisation sur plusieurs secondes. De cette précision dépend la qualité image synthétisée, en particulier si l'agilité du porteur lui permet d'effectuer des virages ou des mouvements "turbulents", comme c'est par exemple le cas si le porteur est un drone.

Un but de l'invention est de proposer un moyen de réduire, voire éliminer le volume de données transmises de l'émetteur vers le récepteur, et notamment de supprimer le besoin en datation de ces données.

A cet effet l'invention a pour objet un système radar bistatique pour réaliser des images SAR d'une zone de terrain donnée, comportant des moyens pour émettre une onde radar (émetteur radar et antenne) dans la direction de la zone à imager, et des moyens aptes à recevoir (récepteur radar passif) et à traiter les signaux réfléchis correspondant à la zone illuminée par l'émetteur à l'onde pour constituer une image SAR de ladite zone, les moyens d'émission et les moyens de réception et de traitement étant montés respectivement sur un aéronef et sur une base de réception qui peut être un second aéronefs ou bien une base fixe située au sol. Le système selon l'invention est caractérisé par le fait que l'émetteur émet une onde dont la forme dépend à chaque instant d'émission de la valeur du vecteur vitesse de l'aéronef qui porte l'émetteur, relativement à la direction d'émission de l'onde par les moyens d'émission.

Le système selon l'invention émet ainsi une onde focalisée (focalisation à l'émission) ce qui permet avantageusement de rendre le traitement du signal peu dépendant de la connaissance de la cinématique du du porteur de l'émetteur.

Il permet également de garantir une qualité d'image meilleure, la formation des images n'étant pas dégradée par le problème de la synchronisation des horloges entre le porteur émetteur et le porteur récepteur.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:

- la figure 1, une illustration du principe de fonctionnement d'un système SAR bistatique;
- la figure 2, une illustration du principe de fonctionnement d'un système SAR bistatique selon l'art antérieur;
- la figure 3, une illustration du principe de fonctionnement d'un système SAR bistatique selon l'invention;
- la figure 4, un synoptique présentant les avantages procurés par l'invention selon le type de traitement SAR mis en oeuvre, dans le cas des systèmes SAR à résolution décamétrique;
- la figure 5, un synoptique présentant les avantages procurés par l'invention selon le type de traitement SAR mis en oeuvre, dans le cas des systèmes SAR à résolution métrique et sub-métrique.

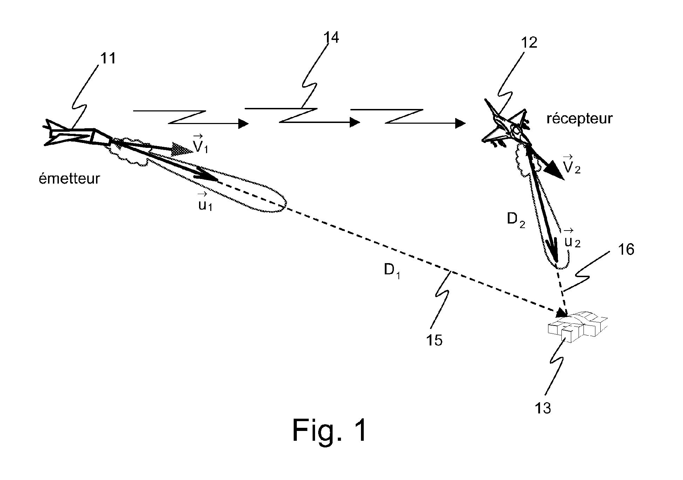

On considère d'abord la figure 1, qui illustre le principe général de fonctionnement d'un système SAR bistatique sur le cas particulier de mise en oeuvre, pris comme exemple non limitatif, dans lequel les moyens pour émettre une onde radar (émetteur radar et antenne) dans la direction de la zone à imager, et des moyens aptes à recevoir (récepteur radar passif) et à traiter les signaux réfléchis, sont portés par des aéronefs différents 11 et 12. Il est ici bien entendu que ce cas particulier n'exclue notamment pas du champ du brevet les systèmes dans lesquels la base de réception, qui comporte les moyens aptes à recevoir et à traiter les signaux réfléchis, est une base placée au sol.

Dans cet exemple de mise en oeuvre, le premier aéronef 11 porte un radar actif, équipé d'un émetteur, avec lequel il illumine la cible ou la zone 13 à imager. Le porteur 11 est animé d'un mouvement symbolisé par le vecteur vitesse $\vec{V}_1$. Le second aéronef 12, quant à lui, porte un radar passif, ne générant aucune émission radioélectrique. Il est animé d'un mouvement symbolisé par le vecteur vitesse $\vec{V}_2$. Selon la configuration de la mission remplie, le porteur 11 suit une trajectoire lui permettant d'illuminer la zone à imager, sans toutefois le conduire à se rapprocher de cette zone. De la sorte, alors qu'il est rendu vulnérable par le fait que le signal qu'il émet le signale à l'attention d'éventuelles présences hostiles sur la zone à imager, il lui est avantageusement possible de rester à une distance lui garantissant une certaine sécurité. En revanche l'aéronef 12 qui porte le radar passif (i. e. le récepteur) ne génère aucune émission susceptible de signaler sa position, de sorte qu'il peut avantageusement effectuer le survol de la zone à imager dans des conditions de sécurité accrues.

Dans un mode SAR classique, il est nécessaire de compenser les mouvements du (ou des) porteur(s) pendant le temps d'illumination de la zone à imager. Pour ce faire, pour un ou plusieurs points de l'image, on calcule classiquement leur migration en distance radiale et en fréquence Doppler. Ces migrations sont compensées à la réception, de manière à obtenir une image nette correspondant à la scène telle qu'on l'aurait observée à un instant donné durant le temps d'illumination. Cette opération de compensation des divers mouvements est classiquement appelée focalisation.

Pour les systèmes SAR monostatiques, ces mouvements sont ceux du porteur du radar qui sert à la fois à l'émission et à la réception.

Pour les systèmes SAR bistatiques (ou multistatiques), ces mouvements sont ceux du porteur 11 du radar émetteur pour le trajet $D_1$ de l'onde aller (radar / sol), matérialisé par la ligne pointillée 15 reliant le porteur 11 à la zone 13, puis ceux de porteur 12 du radar récepteur pour le trajet $D_2$ de l'onde retour (sol / radar), matérialisé par la ligne pointillée 16 reliant le porteur 12 à la zone 13.

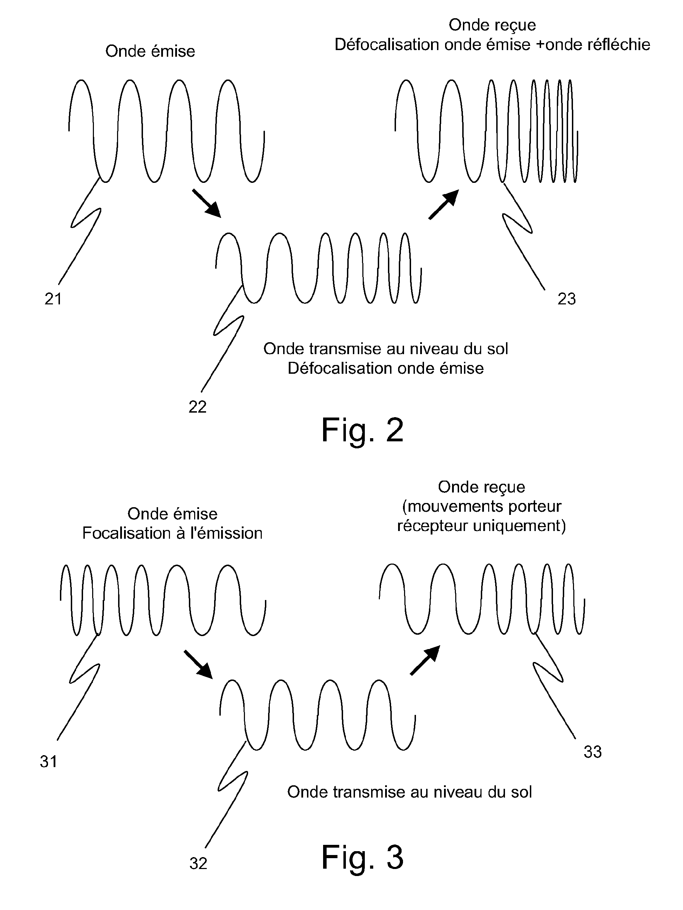

Par suite comme l'illustre la figure 2, pour le même exemple, le signal 22 reçu par le récepteur 12 est affecté d'une modulation résultant de la combinaison de ces mouvements (modulation d'amplitude et/ou de phase).

Pour compenser ces migrations, il est nécessaire que le porteur 12 chargé de la réception et du traitement du signal utilisé pour former l'image SAR ait connaissance des paramètres cinématiques des deux porteurs. Ceci passe généralement par la transmission du porteur 11 au porteur 12 des informations relatives à la cinématique du premier, transmission symbolisée par les flèches brisées 14 sur la figure 1.

Un but de l'invention est, comme cela a été dit précédemment, de supprimer ou du moins de réduire cette transmission d'informations de l'émetteur 11 au récepteur 12. Pour ce faire le principe mise en oeuvre par l'invention, illustré par la figure 3 sur l'exemple de mise en oeuvre de la figure 1, consiste à traiter l'onde radar 31 émise de façon à ce que le traitement de focalisation appliqué à l'onde radar réfléchie reçue par le récepteur du porteur 12 ne fasse plus intervenir la connaissance des mouvements du porteur émetteur 11. Par suite, selon l'invention, l'onde émise 31 est affectée d'une correction d'amplitude et de phase anticipée, correction qui permet de compenser les migrations du porteur émetteur 11 directement sur l'onde émise, avant même la transmission du signal émis. Cette compensation anticipée constitue ainsi une véritable focalisation a priori. De la sorte l'onde 32 illuminant la zone à imagée étant focalisée, l'onde 33 reçue par le récepteur 12, n'est plus affectée que par les mouvements du porteur récepteur 12. Par suite la transmission au récepteur 12 des informations cinématiques relatives au porteur 11 ne sont plus nécessaires.

Les illustrations des figures 2 et 3 permettent de comparer le principe de fonctionnement du système SAR selon l'invention (figure 3) à celui d'un système SAR classique (figure 2).

Dans un système SAR bistatique classique, le signal radar 21 émis peut être décrit par la relation suivante:

$$s_E(t) = A(t)\exp(2\pi f_0 t) \qquad\qquad [1]$$

dans laquelle A représente l'amplitude du signal et $f_0$ la fréquence porteuse.

Le signal 23 reçu par le récepteur peut quant à lui être décrit par la relation suivante:

$$\begin{aligned} s_R(t) &= s_E(t - \tau_1(t) - \tau_2(t)) \\ &= A(t - \tau_1(t) - \tau_2(t))\exp\big[2\pi f_0(t - \tau_1(t) - \tau_2(t))\big] \end{aligned} \qquad [2]$$

dans laquelle $\tau_1(t)$ et $\tau_2(t)$ représentent respectivement les temps de propagation de l'onde émise respectivement entre l'émetteur et la cible et entre la cible et le récepteur. En fonction du temps t, $\tau_1(t)$ et $\tau_2(t)$ ont pour expression:

$$\tau_1(t) = \frac{D_1(t)}{c}$$

et

$$\tau_2(t) = \frac{D_2(t)}{c}$$

avec:

$$D_i(t) = D_i(0) - \int_0^t \vec{V}_i(\theta).\vec{u}_i(\theta)\cdot d\theta = D_i(0) - \int_0^t VR_i(\theta)\cdot d\theta, \quad i \in \{1,2\} \qquad [3]$$

avec $VR_i(\theta) = \vec{V}_i(\theta).\vec{u}_i(\theta)$, $\vec{V}_i(t)$ étant le vecteur vitesse instantanée du porteur i ( $i \in \{,21\}$, et $\vec{u}_i(t)$ le vecteur de visée instantané du radar monté sur le porteur i. Les porteurs 1 et 2 sont respectivement représentés par les aéronefs 11 et 12. L'instant t = 0 représente ici un instant de référence durant l'intervalle de temps de l'illumination.

Par suite, la relation [3] peut s'écrire:

$$s_R(t) = A(t - \tau_1(t) - \tau_2(t))\cdot\exp\left[2\pi f_0\left(t - \frac{1}{c}\left(D_1(0) - \int_0^t VR_1(\theta)\cdot d\theta\right) - \tau_2(t)\right)\right] \qquad [4]$$

On constate Ainsi que le signal reçu par le récepteur, varie d'un instant t à l'autre de mesure du fait du déplacement des porteurs de l'émetteur et du récepteur. De la sorte, si l'on veut pouvoir traiter conjointement les signaux reçus correspondant à un intervalle de temps d'éclairement relativement important, comme c'est le cas, par principe lorsque l'on effectue un traitement d'imagerie de type SAR, il est nécessaire de refocaliser le signal c'est à dire de compenser les variations du signal reçues dues aux mouvements des porteurs. Sans quoi, l'image obtenue est floue. Cette refocalisation nécessite dans le cas classique, de connaître <u>pour chaque instant t considéré</u>, non seulement les paramètres cinématiques du porteur récepteur, mais aussi ceux du porteur émetteur (vitesse radiale du porteur émetteur relativement au point illuminé). Or le récepteur et les moyens de traitement du signal reçu étant porté par un aéronef différent qui ne réalise pas l'émission, le traitement de compensation nécessite une communication permanente et datée entre les deux porteurs. Cette nécessité d'établir une communication permanente, a en particulier, pour résultat de rendre le fonctionnement du système plus complexe

Par suite, après compensation des variations de distance et de fréquence doppler, dues aux mouvements des porteurs, le signal focalisé (sur le point central de l'image) peut être exprimé par la relation suivante:

$$s_C(t) = A(t) \exp\left[2\pi f_0(t - \frac{D_1}{c} - \frac{D_2}{c} + VR_1 t + VR_2 t)\right] \qquad [5]$$

Dans un système SAR bistatique selon l'invention, en revanche, le signal radar 31, émis par le porteur émetteur 11, est un signal modifié de façon à réaliser une focalisation à l'émission. Cette focalisation est réalisée par rapport un instant donné de la période d'illumination. Elle peut être décrite par la relation suivante:

$$s_E(t) = A(t + \tau_1(t)) \exp(2\pi f_0(t + \Delta\tau_1(t)) \qquad [6]$$

dans laquelle A représente l'amplitude du signal et $f_0$ la fréquence porteuse. Les termes $\tau_1(t)$ et $\Delta\tau_1(t)$ ont respectivement pour expression:

$$\tau_1(t) = \frac{D_1(t)}{c} = \frac{1}{c} \cdot \left(D_1(0) + \int_0^t \vec{V}_1(\theta).\vec{u}_1(\theta)d\theta\right) = \frac{1}{c} \cdot \left(D_1(0) + \int_0^t VR_1(\theta) \cdot d\theta\right) \qquad [7]$$

et

$$\Delta\tau_1(t) = \frac{1}{c}\left(-VR_1(0) \cdot t + \int_0^t \vec{V}_1(\theta).\vec{u}_1(\theta)d\theta\right) = \frac{1}{c}\left(-VR_1(0) \cdot t + \int_0^t VR_1(\theta) \cdot d\theta\right) \qquad [8]$$

où $\vec{V}_1(t)$ est le vecteur vitesse instantanée du porteur émetteur 11, $\vec{u}_1(t)$ le vecteur de visée instantané du radar émetteur. $VR_1(t)$ représente à l'instant t considéré, la vitesse radiale du radar émetteur relativement au point illuminé. L'instant de référence t = 0 est ici défini comme le début de l'illumination du radar émetteur, mais il peut aussi être choisi quelconque sur toute la durée d'illumination.

Par suite, le signal 33 reçu par le récepteur du système selon l'invention, peut, quant à lui, être décrit par la relation suivante:

$$s_R(t) = s_E(t - \tau_1(t) - \tau_2(t)) = A(t - \tau_2(t)) \cdot \exp\left[2\pi f_0(t - \tau_1(t) - \tau_2(t) + \Delta\tau_1(t))\right] \qquad [9]$$

dans laquelle, comme précédemment, $\tau_1(t)$ et $\tau_2(t)$ représentent respectivement les temps de propagation aller et retour de l'onde émise, en fonction du temps, temps qui ont pour expression:

$$\tau_1(t) = \frac{D_1(t)}{c}$$

et

$$\tau_2(t) = \frac{D_2(t)}{c}$$

avec:

$$D_i(t) = D_i(0) - \int_0^t \vec{V}_i(\theta) \cdot \vec{u}_i(\theta) \cdot d\theta = D_i(0) - \int_0^t VR_i(\theta) \cdot d\theta \quad i \in \{1,2\} \qquad [10]$$

où $\vec{V}_i(t)$ est le vecteur vitesse instantanée du porteur i ( $i \in \{1,2\}$), et $\vec{u}_i(t)$ le vecteur de visée instantané du radar monté sur le porteur i, les porteurs 1 et 2 étant respectivement représentés par les aéronefs 11 et 12.

Par suite en remplaçant dans la relation [9] $\Delta\tau_1(t)$ par son expression (relation [8]) on peut avantageusement écrire, dans le cas du système selon l'invention:

$$s_R(t) = A(t - \tau_2(t)) \cdot \exp\left[ 2\pi f_0 (t - \frac{D_1(0)}{c} + \frac{VR_1(0)}{c} \cdot t - \tau_2(t)) \right] \qquad [10]$$

Ainsi, si l'on compare les relations [4] et [10], on constate que l'expression du signal reçu par le récepteur dans le système SAR bistatique selon l'invention (relation [10]), ne fait avantageusement plus apparaître, outre les termes liés à la cinématique du porteur récepteur, que deux termes ponctuels relatifs à la cinématique du porteur émetteur, la distance radiale $D_1(0)$ et la vitesse radiale $VR_1(0)$ du porteur émetteur à l'instant de référence t = 0. Par suite la focalisation de l'image à la réception, focalisation sur le point central par exemple, pourra être opérée de manière plus simple sans nécessiter la connaissance pour chaque instant de la période d'illumination de la cinématique du porteur émetteur (disparition du terme " $\int_0^t VR_1(\theta) \cdot d\theta$ " dans l'expression de $s_R(t)$). De la sorte, en réalisant la focalisation à deux niveaux, au niveau du signal émis d'abord, puis au niveau du signal reçu, il est possible d'effectuer au niveau du porteur récepteur un traitement de focalisation ne nécessitant qu'une connaissance très limitée voir nulle de la cinématique du porteur émetteur. Cette connaissance ne nécessite avantageusement pas l'établissement d'une liaison permanente entre le porteur émetteur et le porteur récepteur.

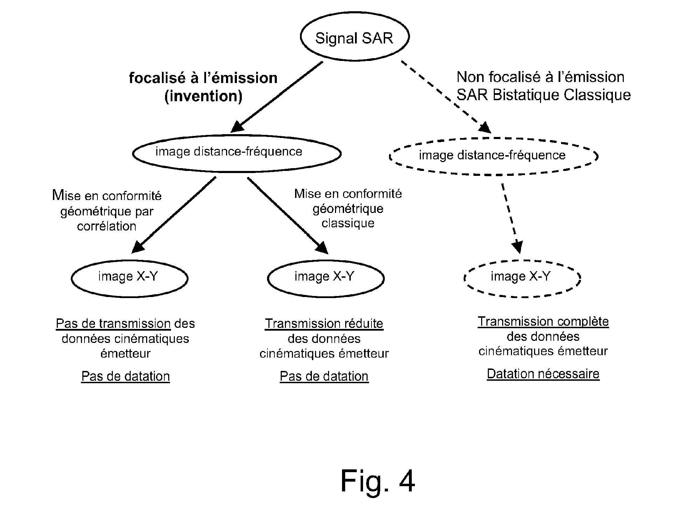

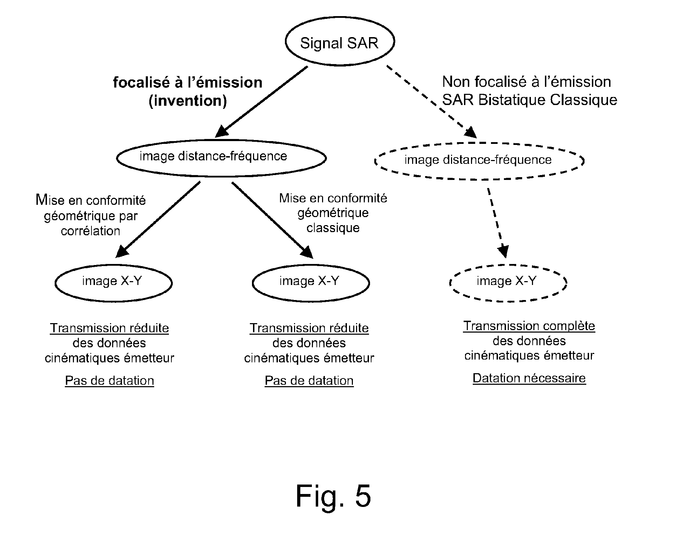

On s'intéresse ensuite aux figures 4 et 5, qui mettent en évidence l'intérêt du principe de focalisation du système SAR bistatique selon l'invention.

La figure 4 illustre cet intérêt dans le cas d'un système SAR décamétrique, pour lequel la résolution cherchée est de l'ordre de la dizaine de mètre.

Dans le cadre d'un mode radar SAR décamétrique, il est connu que l'obtention d'une image nette ne nécessite qu'une seule loi de correction des migrations distance et fréquence Doppler. Cette correction demande de connaître le vecteur vitesse du porteur à chaque instant pendant tout le temps d'illumination du radar.

Le principe de focalisation à l'émission selon l'invention permet avantageusement d'éviter la prise en compte du vecteur vitesse de l'émetteur pour la formation de l'image SAR distance-fréquence. En effet même si un certain flou reste présent en certains points de l'image, l'émission du signal focalisé suffit pour obtenir une netteté suffisante pour la résolution atteinte.

En revanche, la mise en conformité géométrique nécessite théoriquement de connaître les positions et les vitesses des porteurs émetteur et récepteur dans un repère absolu mais uniquement pour l'instant de formation ( instant de référence) de l'image. Cependant, dans le cas où l'on dispose d'une carte prévisionnelle géoréférencée de la zone imagée, l'opération de mise en conformité géométrique peut être réalisée par corrélation entre la carte prévisionnelle et l'image distance-fréquence obtenue. Avantageusement, on évite alors complètement la transmission vers le porteur récepteur de données cinématiques relatives au porteur émetteur. Dans le cas où la mise en conformité géométrique est réalisée de manière classique (conversion polaire-rectangulaire) la transmission de la position et de la vitesse du porteur émetteur pour l'instant de formation de l'image est nécessaire. Elle est cependant avantageusement réduite à ces seules informations.

Dans le cas d'un système SAR bistatique selon l'invention, les données cinématiques à transmettre, quel que soit le mode de mise en conformité utilisé, se trouvent soit réduites, soit supprimées par la focalisation du signal émis.

La figure 5 illustre de la même manière, l'intérêt du système selon l'invention, dans le cas d'un système SAR métrique ou sub-métrique.

Dans le cadre d'un mode SAR métrique voire sub-métrique, il est nécessaire, pour obtenir une image nette, de compenser les migrations distance et fréquence apparaissant en plusieurs points de l'image. C'est pourquoi un système SAR bistatique classique, nécessite plusieurs opérations de focalisation en différents points de l'image formée. Ceci nécessite de connaître la cinématique du porteur émetteur à chaque instant de la période d'éclairement et donc la transmission permanente de données cinématiques datées. Avec un système selon l'invention en revanche, il est avantageusement possible de limiter le nombre de données échangées. Pour ce faire, on procède de la même manière que pour un mode décamétrique en focalisant à l'émission en un seul point de l'image avec une seule loi de compensation de ses migrations distance et fréquence. Ensuite, la focalisation autour des autres points est réalisée ne nécessite la connaissance des paramètres cinématiques du porteur émetteur qu'à l'instant de formation de l'image (instant de référence). Bien qu'il reste à transmettre au porteur récepteur, dans ce cas, des données cinématiques relatives au porteur émetteur, leur nombre est néanmoins avantageusement réduit, de sorte que le système SAR bistatique selon l'invention propose une solution avantageuse aussi bien dans le domaine décamétrique que dans les domaines métrique ou sub-métrique.

**Revendications**

1.  Système radar bistatique pour réaliser des images SAR d'une zone de terrain (13) donnée, comportant des moyens pour émettre une onde radar dans la direction de la zone à imager, et des moyens aptes à recevoir et à traiter les signaux réfléchis correspondant à la zone illuminée par l'émetteur à l'onde pour constituer une image SAR de ladite zone, les moyens d'émission étant montés sur un premier aéronef porteur (11) et les moyens de réception et de traitement étant montés sur une base de réception; **caractérisé en ce que** l'émetteur émet une onde (31) dont la forme dépend à chaque instant d'émission de la valeur du vecteur vitesse $\vec{V}_1$ du premier aéronef porteur (11) relativement à la direction d'émission (15) de l'onde par les moyens d'émission.

2.  Système selon la revendication 1 **caractérisé en ce que** l'onde $S_E(t)$ émise a pour expression:

$$s_E(t) = A(t + \tau_1(t)) \exp(2\pi f_0(t + \Delta\tau_1(t))$$

dans laquelle A représente l'amplitude du signal et $f_0$ la fréquence porteuse, les termes $\tau_1(t)$ et $\Delta\tau_1(t)$ ayant respectivement pour expression:

$$\tau_1(t) = \frac{D_1(t)}{c} = \frac{1}{c} \cdot \left( D_1(0) + \int_0^t VR_1(\theta) \cdot d\theta \right)$$

et

$$\Delta\tau_1(t) = \frac{1}{c}\left(-VR_1(0)\cdot t + \int_0^t VR_1(\theta)\cdot d\theta\right)$$

$VR_1(t)$ représentant, à l'instant t considéré, la vitesse radiale du radar émetteur relativement au point illuminé (13).

3. Système selon l'une des revendications 1 ou 2, **caractérisé en ce que**, le premier aéronef porteur et la base de réception sont équipés de moyens pour établir une liaison de communication (14) permettant au premier aéronef, porteur des moyens d'émission, de communiquer à la base de réception ses paramètres cinématiques, de manière intermittente à chaque période d'illumination.

4. Système selon l'une quelconque des revendications précédentes, **caractérisé en ce que**, la base de réception est un second aéronef porteur (12).

5. Système selon l'une quelconque des revendications 1 à 3, **caractérisé en ce que** la base de réception est un système placé au sol.

Fig. 1

Onde reçue
Défocalisation onde émise +onde réfléchie

Onde émise

21

23

Onde transmise au niveau du sol
Défocalisation onde émise

22

# Fig. 2

Onde reçue
(mouvements porteur
récepteur uniquement)

Onde émise
Focalisation à l'émission

31

33

Onde transmise au niveau du sol

32

# Fig. 3

**focalisé à l'émission
(invention)**

Non focalisé à l'émission
SAR Bistatique Classique

Signal SAR

image distance-fréquence

image distance-fréquence

Mise en conformité
géométrique par
corrélation

Mise en conformité
géométrique
classique

image X-Y

image X-Y

image X-Y

Pas de transmission des
données cinématiques
émetteur

Pas de datation

Transmission réduite
des données
cinématiques émetteur

Pas de datation

Transmission complète
des données
cinématiques émetteur

Datation nécessaire

# Fig. 4

Fig. 5

Europäisches
Patentamt

European
Patent Office

Office européen
des brevets

**RAPPORT DE RECHERCHE EUROPEENNE**

Numéro de la demande

EP 08 16 8445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/151540 A1 (FAULKNER DAVID A [US]) 14 août 2003 (2003-08-14) | 1,3-5 | INV.<br>G01S13/90 |
| A | * abrégé; figure 1 *<br>* alinéas [0002] - [0004], [0013] - [0020] * | 2 | |
| | ----- | | |
| A | US 5 113 193 A (POWELL NORMAN F [US] ET AL) 12 mai 1992 (1992-05-12)<br>* abrégé * | 1 | |
| | ----- | | |
| A | US 6 747 593 B1 (JAFFER AMIN G [US]) 8 juin 2004 (2004-06-08)<br>* abrégé; figure 3 *<br>* colonne 5, ligne 57 - colonne 6, ligne 37 * | 1 | |
| | ----- | | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| La Haye | 26 février 2009 | Vial, Antoine |

EPO FORM 1503 03.82 (P04C02)

**EP 2 058 674 A1**

**ANNEXE AU RAPPORT DE RECHERCHE EUROPEENNE
RELATIF A LA DEMANDE DE BREVET EUROPEEN NO.**

EP 08 16 8445

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-02-2009

| Document brevet cité au rapport de recherche | Date de publication | Membre(s) de la famille de brevet(s) | Date de publication |
|---|---|---|---|
| US 2003151540 A1 | 14-08-2003 | AT 324595 T<br>AU 2003299452 A1<br>DE 60304837 T2<br>EP 1474702 A1<br>WO 2004042422 A1 | 15-05-2006<br>07-06-2004<br>07-12-2006<br>10-11-2004<br>21-05-2004 |
| US 5113193 A | 12-05-1992 | AUCUN | |
| US 6747593 B1 | 08-06-2004 | AUCUN | |

Pour tout renseignement concernant cette annexe : voir Journal Officiel de l'Office européen des brevets, No.12/82

EPO FORM P0460

14